# EUROPÄISCHE PATENTSCHRIFT

(11) **EP 0 814 002 B1**
(45) Veröffentlichungstag und Bekanntmachung des Hinweises auf die Patenterteilung: **30.01.2002**
(21) Anmeldenummer: 97109368.7
(22) Anmeldetag: 10.06.1997
(51) Int. Cl.: B60R 21/32

(54) **Verfahren zum Verbinden einer Zustandserkennungsvorrichtung eines passiven Sicherheitssystems für Kraftfahrzeuge mit einer Steuereinheit**
Method to connect a control unit with a state detection device in a passive safety system of a motor vehicle
Procédé pour connecter une unité de commande avec un dispositif de détection de l'état d'un système de sécurité passive dans un véhicule à moteur

(30) Priorität: 18.06.1996 DE 19624199
(43) Veröffentlichungstag der Anmeldung: 29.12.1997
(73) Patentinhaber: Conti Temic microelectronic GmbH, 90411 Nürnberg (DE); Bayerische Motoren Werke Aktiengesellschaft, 80788 München (DE)
(72) Erfinder: Fendt, Günter, 86529 Schrobenhausen (DE); Hora, Peter, 86529 Schrobenhausen (DE); Spies, Hans, 85276 Pfaffenhofen (DE); Rauh, Helmut, 85221 Dachau (DE)
(74) Vertreter: Maute, Hans-Jürgen, Dipl.-Ing.

(56) Entgegenhaltungen:
- DE-U- 9 317 678
- US-A- 4 099 157
- US-A- 4 785 906
- US-A- 4 943 087

## Beschreibung

Die Erfindung betrifft ein Verfahren zum Verbinden einer Zustandserkennungsvorrichtung eines passiven Sicherheitssystems für Kraftfahrzeuge mit einem Steuergerät und eine Schaltung zur Durchführung des Verfahrens.

Kraftfahrzeuge werden zunehmend mit Sicherheitssystemen, wie Airbag-Systeme, Gurtstraffer-Systeme und Überrollbügel-Systeme, ausgerüstet. Da es sich hierbei um sicherheitskritische Systeme handelt, werden an deren Zuverlässigkeit große Anforderungen gestellt. Hierzu ist es wichtig, daß die Zustandserkennungsvorrichtungen von Zusatzeinrichtungen solcher Sicherheitssysteme, wie beispielsweise Beifahrersitzbelegungserkennung, Gurtschloß-Zustandserkennung, sicher funktionieren und zuverlässige Zustandsinformationen liefern, so daß im Ernstfall für die Kraftfahrzeuginsassen ein ausreichender Schutz gewährleistet ist.

So ist es bekannt, daß zur Gurtschloß-Zustandserkennung ein mikromechanischer Gurtkontaktschalter verwendet wird, welcher jedoch bzgl. seiner Zuverlässigkeit geringe Mängel aufweist. Daher wurde zur Verbesserung solcher Gurtschloß-Zustandserkennungen Vorrichtungen, vorzugsweise HallSensoren, entwickelt, welche berührungslos und somit verschleißfrei arbeiten.

Werden jedoch von den Automobilherstellern übergangsweise Systeme sowohl mit mikromechanischen Gurtkontaktschaltern als auch mit Hall-Sensoren eingesetzt, erfordert dies jeweils eine unterschiedliche Aufbereitung (Aus DE 93 17 678 U ist ein Fahrzeugsicherheitssystem) mit einer Airbagsteuereinheit und Sensoren bekannt das die Steuereinheit über den Status der Fahrgäste informiert. Dazu werden zwischen dem Sensor und der Steuereinheit digitale Signale (Bits) übertragen. Weiterhin nennt dieses Dokument die Verwendung von mechanischen Schaltern und Hallgeneratoren als Sensoren. Das Dokument US 4,099,157 zeigt eine Eindrahtverbindung, auf der sowohl eine Fehlererkennung als auch eine Energieversorgung bei einer Verbindung von Komponenten mit Steuergeräten stattfindet. Das Dokument US 4,785,906 offenbart ein Gurtschloß mit einem Mikroschalter, der erkennt, ob die Gurtzunge in das Schloß eingeführt wurde. der die Zustandsinformation enthaltenden Signale, damit die zugehörige Steuereinheit des Sicherheitssystems diese Signale auswerten kann.

Daher liegt die Aufgabe der Erfindung darin, ein Verfahren anzugeben, mit dem verschiedene Zustandserkennungsvorrichtungen, die mit unterschiedlichen physikalischen Wirkungsprinzipien arbeiten, in einfacher und kostengünstiger Weise derart mit der Steuereinheit des Sicherheitssystems verbunden werden können, so daß das von der jeweils angeschlossenen Zustandserkennungsvorrichtung erzeugte Signal der Steuereinheit des Sicherheitssystems in auswertbarer Form zuführbar ist.

Diese Aufgabe wird durch die Merkmale des Patentanspruches 1 gelöst, indem mittels einer Eindraht-Verbindung in Abhängigkeit des physikalischen Wirkungsprinzips der anzuschließenden Zustandserkennungsvorrichtung sowohl eine Spannungs- oder spannungsstabilisierte Stromquelle zur Erzeugung einer Betriebsspannung bzw. eines Betriebsstromes von der Steuereinheit eingeschaltet wird als auch eine dem physikalischen Wirkungsprinzip entsprechende Aufbereitung des von der Zustandserkennungsvorrichtung gelieferten, die Zustandsinformation enthaltenen Signals vorgenommen wird und das aufbereitete Signal von der Steuereinheit ausgewertet wird.

Mit dem erfindungsgemäßen Verfahren ist es nun möglich, sehr flexibel auf die Art der angeschlossenen Zustandserkennungsvorrichtung zu reagieren.

Bei einer vorteilhaften Ausführungsform der Erfindung wird in Abhängigkeit der physikalischen Wirkungsweise der Zustandserkennungsvorrichtung das Signal zu einem Analog- oder Digital-Signal aufbereitet. Vorzugsweise werden dann diese Signale dem Analog- bzw. dem Digital-Eingang der Steuereinheit zugeführt. Damit kann in vorteilhafter Weise softwaremäßig, vorzugsweise mit einem softwaregesteuerten. Schalter der entsprechende Eingang der Steuereinheit aktiviert werden.

Des weiteren sind bei einer anderen vorteilhaften Weiterbildung der Erfindung Zustandserkennungsvorrichtungen erster und zweiter Art derart vorgesehen, daß die Zustandserkennungsvorrichtung erster Art zur Zustandsdetektion mit einem mechanischen Wirkungsprinzip, insbesondere mittels eines mikromechanischen Schalters, arbeitet, dagegen die Zustandserkennungsvorrichtung zweiter Art mit einem nicht-mechanischen Wirkungsprinzip, insbesondere mit Hall-Sensoren, Infrarot-Sensoren, piezoelektrischen, magnetostriktiven, elektrodynamischen, kapazitiven oder piezoresistiven Sensoren, arbeitet.

Ferner wird im Falle einer angeschlossenen Zustandserkennungsvorrichtung erster Art sowohl die Spannungsquelle von der Steuereinheit eingeschaltet als auch das Analog-Signal dem Analog-Eingang der Steuereinheit zugeführt.

Dagegen wird bei einer angeschlossenen Zustandserkennungsvorrichtung zweiter Art sowohl die spannungsstabilisierte Stromquelle von der Steuereinheit eingeschaltet als auch das Digital-Signal dem Digital-Eingang der Steuereinheit zugeführt.

zur Durchführung des erfindungsgemäßen Verfahrens wird eine Schnittstellenschaltung angegeben, die über die Eindraht-Verbindung mit der Zustandserkennungsvorrichtung verbunden ist und die eine von der Steuereinheit schaltbare Spannungsquelle aufweist, die im eingeschalteten Zustand ggf. eine angeschlossene Zustandserkennungsvorrichtung erster Art mit einer Betriebsspannung versorgt und die ferner eine ebenfalls von der Steuereinheit schaltbare spannungsstabilisierte Stromquelle aufweist, die im eingeschalteten Zustand ggf. eine angeschlossene Zustandserkennungsvorrichtung zweiter Art mit einem Betriebsstrom versorgt.

Damit wird eine Schnittstellenschaltung geschaffen, die beispielsweise für eine Gurtschloß-Zustandserkennung einsetzbar ist, die entweder einen mikromechanischen Gurtschloß-Kontaktschalter oder einen Hall-Sensor zur Zustandsdetektion aufweisen kann, so daß hierdurch hohe Produktionsstückzahlen, die zu einer Kostenreduzierung führen, erzielbar sind und gleichzeitig bei den Automobilherstellern flexible Einbauvarianten ermöglichen.

Bei einer weiteren Ausführungsform der Schnittstellenschaltung sind Schaltungsmittel vorgesehen, die im Falle einer angeschlossenen Zustandserkennungsvorrichtung erster Art mit dem Analog-Eingang der Steuereinheit verbunden werden und gleichzeitig zur Erzeugung eines digitalen Signals eine vergleichsschaltung in der Schnittstellenschaltung realisiert wird, die im Falle einer angeschlossenen Zustandserkennungsvorrichtung zweiter Art mit dem Digital-Eingang der Steuereinheit verbunden wird, wobei die vergleichsschaltung ein auf der Eindraht-Verbindung erzeugtes Spannungspotential mit einer Referenzspannung vergleicht.

Somit kann in vorteilhafter Weise die vorgeschlagene Schnittstellenschaltung als Eingang sowohl analoge als auch digitale Signale verarbeiten.

Ferner kann bei einer Fortbildung der erfindungsgemäßen Schnittstellenschaltung als Schaltungsmittel ein widerstandsnetzwerk und als Vergleichsschaltung ebenfalls ein Widerstandsnetzwerk und ein Komparator vorgesehen werden, wobei jeweils das gleiche widerstandsnetzwerk verwendbar ist.

Dies führt zu einem einfachen und damit kostengünstigen Aufbau der Schhittstellenschaltung.

Schließlich stellt die bei der Schnittstellenschaltung verwendete Eindraht-Verbindung einen Stecker-Pin eines Steckers dar.

Im folgenden soll die Durchführung des erfindungsgemäßen Verfahrens anhand einer Schnittstellenschaltung im Zusammenhang mit den Zeichnungen dargestellt und erläutert werden. Es zeigen:
- Figur 1: ein Schaltbild einer Schnittstellenschaltung zum Anschluß verschiedener Gurtschloß-Zustandserkennungsvorrichtungen und
- Figur 2: ein Schaltbild der Schnittstellenschaltung gemäß Figur 1 mit Zustandserkennungsvorrichtungen weiterer Zusatzfunktionen.

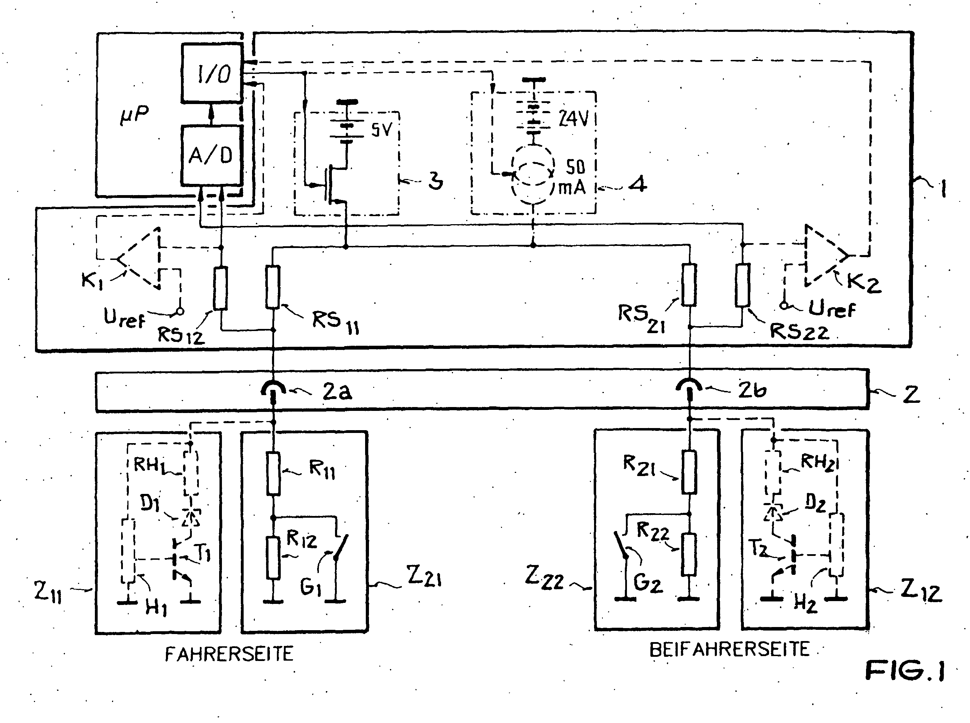

Eine Schnittstellenschaltung 1 nach Figur 1 enthält eine Spannungsquelle 3, eine spannungsstabilisierte Stromquelle 4, zwei Komparatoren K₁ und K₂ sowie vier Widerstände Rₛ₁₁, Rₛ₁₂, Rₛ₂₁ und Rₛ₂₂. Diese Schnittstellenschaltung 1 ist über Stecker-Pins 2a und 2b einer Steckerverbindung 2 mit jeweils einer Zustandserkennungsvorrichtung Z₁₁ bzw. Z₂₁ und Z₂₂ bzw. Z₁₂ verbunden.

Diese Zustandserkennungsvorrichtungen Z₁₁ bis Z₂₂ stellen Gurtschloß-Zustandserkennungen - Z₁₁ und Z₂₁ bzw. Z₁₂ und Z₂₂ für die Fahrer- bzw. Beifahrerseite - dar, die auf verschiedenen physikalischen Wirkungsprinzipien beruhen. So enthalten die beiden Zustandserkennungsvorrichtungen Z₂₁ und Z₂₂ einen mikromechanischen Gurtschloß-Kontaktschalter G₁ bzw. G₂, der bei eingerastetem Gurtschloß einen in Reihe mit einem Widerstand R₁₁ bzw. R₂₁ liegenden weiteren Widerstand R₁₂ bzw. R₂₂ überbrückt. Die hierfür erforderliche Betriebsspannung wird von der 5 V-Spannungsquelle 3 bereitgestellt, die über den Widerstand R_{S11} mit dem Stecker-Pin 2a bzw. über den Widerstand R_{S21} mit dem Stecker-Pin 2b verbunden ist.

Die Schaltbarkeit der Spannungsquelle 3 wird mittels eines Halbleiterschalters realisiert, der über eine Ein-/Ausgabeeinheit I/O einer Steuereinheit, insbesondere eines Mikroprozessors µP gesteuert wird. Dieser Mikroprozessor µP stellt die Steuereinheit eines Sicherheitssystems, beispielsweise eines Airbar-Systems, dar.

Im eingeschalteten Zustand dieser Spannungsquelle 3 wird das am Stecker-Pin 2a bzw. 2b erzeugte Spannungssignal über den Widerstand Rₛ₁₂ bzw. Rₛ₂₂ zur Auswertung einem Analog-Eingang eines A/D-Wandlers des Mikroprozessors µP zugeführt, wo vor einer Auswertung dieses Spannungssignal digitalisiert wird. Da die am Stecker-Pin 2a angeschlossene Zustandserkennungsvorrichtung den Gurtschloßzustand auf der Fahrerseite und diejenige am Stekker-Pin 2b angeschlossene Zustandserkennungsvorrichtung den Gurtschloßzustand auf der Beifahrerseite detektiert, steht dem Mikroprozessor µP die Information zur Verfügung, ob der Fahrer bzw. der Beifahrer den Gurt angelegt hat, um entscheiden zu können, ob ggf. der Beifahrer-Airbag und weitere Sicherheitseinrichtungen auszulösen sind.

Daß an den Stecker-Pin 2a bzw. 2b der Steckerverbindung 2 anstatt der Zustandserkennungsvorrichtung Z₂₁ bzw. Z₂₂ die Zustandserkennungsvorrichtung Z₁₁ bzw. Z₁₂ anschließbar ist je nach vorgabe des Automobilherstellers -, ist in der Figur 1 durch die gestrichelte Darstellung angezeigt.

Diese Zustandserkennungsvorrichtungen Z₁₁ und Z₁₂ enthalten einen Hall-Sensor H₁ bzw. H₂, der im eingerasteten Zustand des Gurtschlosses einen Transistor T₁ bzw. T₂ aufsteuert. Um diesen Betrieb zu gewährleisten, wird anstelle der Spannungsquelle 3 die spannungsstabilisierte Stromquelle 4 durch den Mikroprozessor µP eingeschaltet, die z. B. von einer 24 V-Spannungsquelle gespeist wird und einen Strom von 50 mA liefern kann. Ein solcher Betriebsstrom speist einmal den Hall-Sensor H₁ bzw. H₂, der z. B. maximal 10 mA aufnimmt, sowie einen von dem Transistor T₁ bzw. T₂ gesteuerten Stromkreis, der z. B. aus einer Zenerdiode D₁ bzw. D₂ und einem Widerstand R_{H1} bzw. R_{H2} besteht. In Abhängigkeit des Gurtschloß-Zustandes wird an dem Stecker-Pin 2a bzw. 2b ein Spannungspotential erzeugt, das über den Widerstand R_{S12} bzw. R_{S22} auf den einen Eingang eines Komparators K₁ bzw. K₂ geführt wird. Am anderen Eingang dieses Komparators K₁ bzw. K₂ wird eine Referenzspannung, vorzugsweise 12 V, angelegt. Damit erscheint am Ausgang dieses Komparators K₁ bzw. K₂ ein digitales Signal, das den Gurtschloß-Zustand anzeigt und zur Auswertung dem digitalen Eingang des Mikroprozessors µP zugeführt wird. Der digitale Eingang führt auf die Ein-/Ausgabeeinheit I/O des Mikroprozessors µP.

Mit dieser Schnittstellenschaltung 1 ist es somit möglich, Zustandserkennungsvorrichtungen über die Eindraht-Verbindung 2a bzw. 2b mit dem Mikroprozessor µP zu verbinden, die jeweils mit unterschiedlichen physikalischen Wirkungsprinzipien arbeiten. Entsprechend der Art der angeschalteten Zustandserkennungsvorrichtung wird die Steuereinheit µP mittels eines softwaregesteuerten Schalters hierauf eingestellt, so daß entweder die Spannungsquelle 3 oder die spannungsstabilisierte Stromquelle 4 geschaltet wird und hierzu das an dem entsprechenden Analog- bzw. Digital-Eingang anstehende Signal ausgewertet wird.

Schließlich weist die Schnittstellenschaltung 1 nach Figur 1 auch den Vorteil auf, daß sie als Eingangsschaltung sowohl analoge als auch digitale Signale auswerten kann und somit auch als multifunktionale Schnittstelle bezeichenbar ist.

im folgenden wird eine beispielhafte Dimensionierung der Bauteile der Schnittstellenanordnung 1 und der Zustandserkennungsvorrichtungen Z₁₁, Z₁₂, Z₂₁ und Z₂₂ angegeben:

| | | | |
|---|---|---|---|
| Rₛ₁₁ , Rₛ₂₁ : | 619 Ω | R₁₁ , R₂₁ : | 100 Ω |
| Rₛ₁₂ , Rₛ₂₂ : | 4,7 kΩ | R₁₂ , R₂₂ : | 300 Ω |
| U_{ref} = 12 V | | R_{H1} , R_{H2} : | 100 Ω |
| | | D₁ , D₂ : | U _{Z} = 6,2 V |

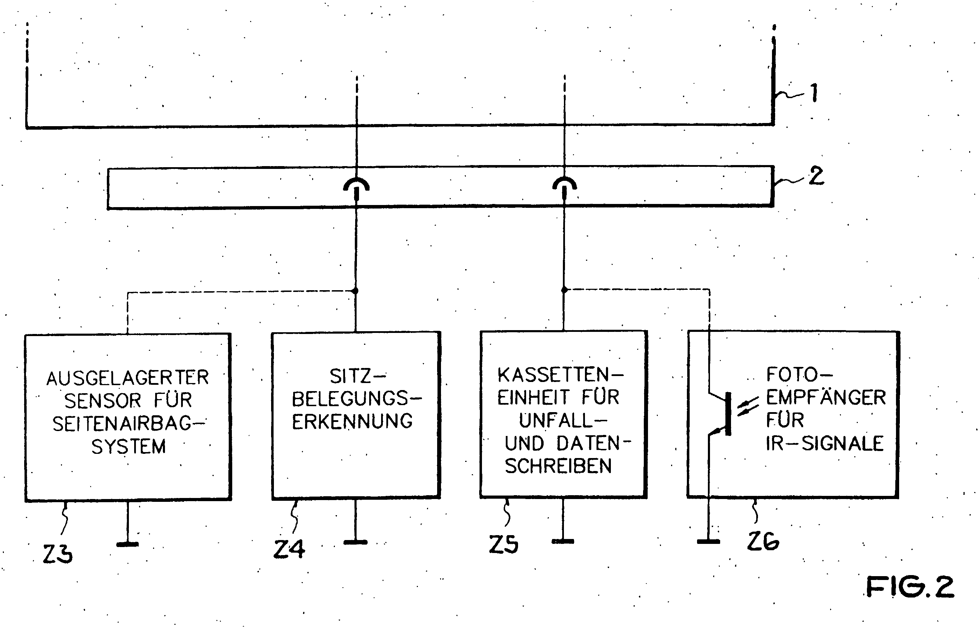

Neben der Übertragung von Gurtschloß-Zustandsinformationen kann die Schnittstellenschaltung 1 auch Zustandsinformationen anderer Zusatzeinrichtungen eines Sicherheitssystems übertragen, So können beispielsweise nach Figur 2 auch Zustandsdaten von einer Sitzbelegungserkennung Z₄, insbesondere einer Kindersitzbelegungserkennung, Daten von einem ausgelagerten System, wie z. B. eines Seitenaufprall-Sensors Z₃, Daten für eine Aufzeichnungseinheit eines Unfall- und Datenschreibers Z₅ als auch Daten eines Fotoempfängers Z₆ von Infrarot-Signalen übertragen werden. Hierzu muß die Dimensionierung der Schnittstellenschaltung 1 an die jeweiligen Zustandserkennungsvorrichtungen angepaßt werden.

## Patentansprüche

1. Verfahren zum wahlweisen Verbinden einer aus einer Gruppe von auf unterschiedlichen physikalischen Wirkungsprinzipien beruhenden Zustandserkennungsvorrichtung (Z₁₁, Z₁₂, Z₂₁, Z₂₂), Insbesondere Gurtschloß-Zustandserkennung, Sitzbelegungserkennung, eines passiven Sicherheitssystems für Kraftfahrzeuge, Insbesondere Airbag-System, Gurtstraffer-System mit dem Signaleingang einer Steuereinheit (µP) des Sicherheitssystems mittels einer Eindraht-Verbindung (2a, 2b), indem in Abhängigkeit des physikalischen Wirkungsprinzips der Zustandserkennungsvorrichtung (Z₁₁, Z₁₂, Z₂₁, Z₂₂) sowohl eine Spannungs- oder spannungsstabilisierte Stromquelle zur Erzeugung einer Betriebsspannung bzw. eines Betriebsstromes von der Steuereinheit (µP) eingeschaltet wird als auch eine dem physikalischen Wirkungsprinzip entsprechende Aufbereitung des von der Zustandserkennungsvorrichtung (Z₁₁, Z₁₂, Z₂₁, Z₂₂) gelieferten, die Zustandsinformation enthaltenden Signals vorgenommen wird und das aufbereitete Signal von der Steuereinheit (µP) ausgewertet wird.

2. Verfahren nach Anspruch 1, bei dem in Abhängigkeit des physikalischen Wirkungsprinzips der Zustandserkennungsvorrichtung (Z₁₁, Z₁₂, Z₂₁, Z₂₂) die Aufbereitung des Signals zu einem Analog- oder Digital-Signal führt.

3. Verfahren nach Anspruch 2, bei dem das aufbereitete digitale Signal dem Digital-Eingang und das Analog-Signal dem Analog-Eingang der Steuereinheit (µP) zugeführt wird.

4. Verfahren nach einem der vorangehenden Ansprüche, bei dem Zustandserkennungsvorrichtungen (Z₁₁, Z₁₂, Z₂₁, Z₂₂) erster und zweiter Art vorgesehen sind, wobei die Zustandserkennungsvorrichtung (Z₂₁, Z₂₂) erster Art zur Zustandsdetektion mit einem mechanischen Wirkungsprinzip, insbesondere mittels eines mikromechanischen Schalters, arbeitet, dagegen die Zustandserkennungsvorrichtung (Z₁₁, Z₁₂) zweiter Art mit einem nicht-mechanischen Wirkungsprinzip, insbesondere mit Hall-Sensoren, Infrarot-Sensoren, piezoelektrischen, magnetostriktiven, elektrodynamischen, kapazitiven oder piezoresistiven Sensoren, arbeitet.

5. Verfahren nach Anspruch 4, bei dem im Falle einer Zustandserkennungsvorrichtung (Z₂₁, Z₂₂) erster Art sowohl die Spannungsquelle (3) von der Steuereinheit (µP) eingeschaltet wird als auch das Analog-Signal dem Analog-Eingang der Steuereinheit (µP) zugeführt wird.

6. Verfahren nach Anspruch 4 oder 5, bei dem im Falle einer Zustandserkennungsvorrichtung (Z₁₁, Z₁₂) zweiter Art sowohl die spannungsstabilisierte Stromquelle (4) von der Steuereinheit (µP) eingeschaltet wird als auch das Digital-Signal dem Digital-Eingang der Steuereinheit (µP) zugeführt wird.

7. Schaltung zur Durchführung des Verfahrens nach einem der vorangehenden Ansprüche, mit folgenden Merkmalen:
a) es ist eine Schnittstellenschaltung (1) vorgesehen, die über die Eindraht-Verbindung (2a, 2b) mit der Zustandserkennungsvorrichtung (Z₁₁, Z₁₂, Z₂₁, Z₂₂) verbunden ist,
b) die Schnittstellenschaltung (1) weist eine von der Steuereinheit (µP) schaltbare Spannungsquelle (3) auf, die im eingeschalteten Zustand die angeschlossene Zustandserkennungsvorrichtung (Z₂₁, Z₂₂) erster Art mit einer Betriebsspannung versorgt und
c) ferner weist die Schnittstellenschaltung (1) eine von der Steuereinheit (µP) schaltbare spannungsstabilisierte Stromquelle (4) auf, die im eingeschalteten Zustand die angeschlossene Zustandserkennungsvorrichtung (Z₁₁, Z₁₂) zweiter Art mit einem Betriebsstrom versorgt.

8. Schaltung zur Durchführung des Verfahrens nach einem der Ansprüche 1 bis 6 sowie nach Anspruch 7, mit folgenden Merkmalen:
a) die Schnittstellenschaltung (1) weist Schaltungsmittel (Rₛ₁₁, Rₛ₁₂, Rₛ₂₁, Rₛ₂₂) auf, die im Falle einer angeschlossenen Zustandserkennungsvorrichtung (Z₂₁, Z₂₂) erster Art mit dem Analog-Eingang der Steuereinheit (µP) verbunden ist und
b) ferner weist die Schnittstellenschaltung (1) zur Erzeugung eines digitalen Signals eine Vergleichsschaltung (K₁, K₂, R_{S11}, R_{S12}, R_{S21}, R_{S22}) auf, die im Falle einer angeschlossenen Zustandserkennungsvorrichtung (Z₁₁, Z₁₂) zweiter Art mit dem Digital-Eingang der Steuereinheit (µP) verbunden ist, wobei die Vergleichsschaltung ein auf der Eindraht-Verbindung (2a, 2b) erzeugtes Spannungspotential mit einer Referenzspannung (U_{ref}) vergleicht.

9. Schaltung zur Durchführung des Verfahrens nach einem der Ansprüche 1 bis 6 sowie nach Anspruch 8, mit folgenden Merkmalen:
a) als Schaltungsmittel (R_{S11}, R_{S12}, R_{S21}, R_{S22}) ist ein Widerstandsnetzwerk vorgesehen und
b) als Vergleichsschaltung (K₁, K₂, R_{S11}, R_{S12}, R_{S21}, R_{S22}) ist ein Widerstandsnetzwerk und ein Komparator vorgesehen, wobei
c) sowohl für a) und b) das gleiche Widerstandsnetzwerk (R_{S11}, R_{S12}, R_{S21}, R_{S22}) verwendet wird.

10. Schaltung zur Durchführung des Verfahrens nach einem der Ansprüche 1 bis 6 und nach Anspruch 9, bei der als Eindraht-Verbindung (2a, 2b) ein Stekker-Pin einer Steckerverbindung (2) verwendet wird.

## Claims

1. Method of selectively connecting a status recognition device (Z₁₁, Z₁₂, Z₂₁, Z₂₂) belonging to a group of status recognition devices each based on different physical working principles, in particular seat-belt lock status recognition device, seat occupation recognition device, of a passive safety system for motor vehicles, in particular airbag system, seat-belt tightener system, to the signal input of a control unit (ìP) of the safety system by means of a single-wire connection (2a, 2b), in that in dependence upon the physical working principle of the status recognition device (Z₁₁, Z₁₂, Z₂₁, Z₂₂) both a voltage source or voltage-stabilized current source for generating an operating voltage or an operating current is switched on by the control unit (ìP) and a conditioning of the signal supplied by the status recognition device (Z₁₁, Z₁₂, Z₂₁, Z₂₂) and containing the status information is effected in accordance with the physical working principle and the conditioned signal is evaluated by the control unit (ìP).

2. Method according to claim 1, whereby in dependence upon the physical working principle of the status recognition device (Z₁₁, Z₁₂, Z₂₁, Z₂₂) the conditioning of the signal leads to an analogue or digital signal.

3. Method according to claim 2, whereby the conditioned digital signal is supplied to the digital input and the analogue signal is supplied to the analogue input of the control unit (ìP).

4. Method according to one of the preceding claims, whereby status recognition devices (Z₁₁, Z₁₂, Z₂₁, Z₂₂) of a first and second type are provided, wherein the status recognition device (Z₂₁, Z₂₂) of the first type for status detection operates on a mechanical working principle, in particular by means of a micromechanical switch, while the status recognition device (Z₁₁, Z₁₂) of the second type operates on a non-mechanical working principle, in particular with Hall-effect, infrared, piezoelectric, magnetostrictive, electrodynamic, capacitive or piezoresistive sensors.

5. Method according to claim 4, whereby in the case of a status recognition device (Z₂₁, Z₂₂) of the first type both the voltage source (3) is switched on by the control unit (ìP) and the analogue signal is supplied to the analogue input of the control unit (ìP).

6. Method according to claim 4 or 5, whereby in the case of a status recognition device (Z₁₁, Z₁₂) of the second type both the voltage-stabilized current source (4) is switched on by the control unit (ìP) and the digital signal is supplied to the digital input of the control unit (ìP).

7. Circuit for effecting the method according to one of the preceding claims, having the following features:
a) an interface circuit (1) is provided, which is connected by the single-wire connection (2a, 2b) to the status recognition device (Z₁₁, Z₁₂, Z₂₁, Z₂₂),
b) the interface circuit (1) comprises a voltage source (3), which is switchable by the control unit (iP) and in the switched-on state supplies the connected status recognition device (Z₂₁, Z₂₂) of the first type with an operating voltage and
c) the interface circuit (1) further comprises a voltage-stabilized current source (4), which is switchable by the control unit (ìP) and in the switched-on state supplies the connected status recognition device (Z₁₁, Z₁₂) of the second type with an operating current.

8. Circuit for effecting the method according to one of claims 1 to 6 as well as according to claim 7, having the following features:
a) the interface circuit (1) comprises switching means (R_{S11}, R_{S12}, R_{S21}, R_{S22}), which in the case of a connected status recognition device (Z₂₁, Z₂₂) of the first type is connected to the analogue input of the control unit (ìP) and
b) the interface circuit (1) for generating a digital signal further comprises a comparator circuit (K₁, K₂, R_{S11}, R_{S12}, R_{S21}, R_{S22}), which in the case of a connected status recognition device (Z₁₁, Z₁₂) of the second type is connected to the digital input of the control unit (ìP), wherein the comparator circuit compares a voltage potential generated at the single-wire connection (2a, 2b) to a reference voltage (U_{ref}).

9. Circuit for effecting the method according to one of claims 1 to 6 as well as according to claim 8, having the following features:
a) as switching means (R_{S11}, R_{S12}, R_{S21}, R_{S22}) a resistor network is provided and
b) as a comparator circuit (K₁, K₂, R_{S11}, R_{S12}, R_{S21}, R_{S22}) a resistor network and a comparator are provided, wherein
c) both for a) and b) the same resistor network (R_{S11}, R_{S12}, R_{S21}, R_{S22}) is used.

10. Circuit for effecting the method according to one of claims 1 to 6 as well as according to claim 9, wherein as a single-wire connection (2a, 2b) a contact pin of a plug-and-socket connection (2) is used.

## Revendications

1. Procédé de liaison sélective d'un dispositif de reconnaissance d'état (Z₁₁, Z₁₂, Z₂₁, Z₂₂) parmi un groupe reposant sur des principes d'action physiques différents, en particulier reconnaissance d'état de bouclage de ceinture, reconnaissance d'occupation de sièges, d'un système de sécurité passive pour véhicules, en particulier système d'airbag, système de bouclage de ceinture avec une entrée de signal d'une unité de commande (µP) du système de sécurité au moyen d'une liaison par câblage (2a, 2b), dans lequel, en fonction du principe d'action physique du dispositif de reconnaissance d'état (Z₁₁, Z₁₂, Z₂₁, Z₂₂), non seulement une source de tension ou une source de courant stabilisée en tension en vue de la génération d'une tension de fonctionnement ou d'un courant de fonctionnement est mise en oeuvre par l'unité de commande (µP), mais également une transformation correspondant au principe d'action physique du signal contenant l'information d'état, délivré par le dispositif de reconnaissance d'état (Z₁₁, Z₁₂, Z₂₁, Z₂₂), est effectuée et le signal transformé est évalué par l'unité de commande (µP).

2. Procédé selon la revendication 1, dans lequel, en fonction du principe d'action physique du dispositif de reconnaissance d'état (Z₁₁, Z₁₂, Z₂₁, Z₂₂), la transformation du signal conduit à un signal analogique ou numérique.

3. Procédé selon la revendication 2, dans lequel le signal numérique transformé est appliqué à l'entrée numérique et le signal analogique à l'entrée analogique de l'unité de commande (µP).

4. Procédé selon l'une des revendications précédentes, dans lequel des dispositifs de reconnaissance d'état (Z₁₁, Z₁₂, Z₂₁, Z₂₂) du premier et du second type sont prévus, le dispositif de reconnaissance d'état (Z₂₁, Z₂₂) du premier type opérant en vue de la détection d'état avec un principe d'action mécanique, en particulier au moyen d'un commutateur micromécanique, par contre le dispositif de reconnaissance d'état (Z₁₁, Z₁₂) du second type opère selon un principe d'action non mécanique, en particulier avec des capteurs de Hall, des capteurs infrarouges, des capteurs piézo-électriques, magnétostrictifs, électrodynamiques, capacitifs ou piézorésistifs.

5. Procédé selon la revendication 4, dans lequel, dans le cas d'un dispositif de reconnaissance d'état (Z₂₁, Z₂₂) du premier type, non seulement la source de tension (3) est délivrée par l'unité de commande (µP), mais également le signal analogique est délivré à l'entrée analogique de l'unité de commande (µP).

6. Procédé selon la revendication 4 ou 5, dans lequel, dans le cas d'un dispositif de reconnaissance d'état (Z₁₁, Z₁₂) du second type, non seulement la source de courant stabilisée en tension (4) est mise en oeuvre par l'unité de commande (µP), mais également le signal numérique est appliqué à l'entrée numérique de l'unité de commande (µP).

7. Circuit en vue de la mise en oeuvre du procédé selon l'une des revendications précédentes, avec les caractéristiques suivantes :
a) un circuit de commutation (1) est prévu, qui est relié, par l'intermédiaire de la liaison de câblage (2a, 2b) au dispositif de reconnaissance d'état (Z₁₁, Z₁₂, Z₂₁, Z₂₂),
b) le circuit de commutation (1) comporte'une source de tension (3) commutable par l'unité de commande (µP), qui alimente, à l'état en service, le dispositif de reconnaissance d'état associé (Z₂₁, Z₂₂) du premier type avec une tension de fonctionnement, et
c) le circuit de commutation (1) comporte en outre une source de courant (4) stabilisée en tension commutable par l'unité de commande (µP), qui, dans l'état en service, alimente le dispositif de reconnaissance d'état associé (Z₁₁, Z₁₂) du second type avec un courant de fonctionnement.

8. Circuit de mise en oeuvre du procédé selon l'une des revendications 1 à 6, ainsi que selon la revendication 7, avec les caractéristiques suivantes :
a) le circuit de commutation (1) présente des éléments de circuit (Rₛ₁₁, Rₛ₁₂, Rₛ₂₁, Rₛ₂₂), qui, dans le cas d'un dispositif de reconnaissance d'état associé (Z₂₁, Z₂₂) du premier type, sont reliés à l'entrée analogique de l'unité de commande (µP), et
b) en outre le circuit de commutation (1) présente, en vue de la génération d'un signal numérique, un circuit de comparaison (K₁, K₂, R_{S11}, R_{S12}, R_{S21}, R_{S22}), qui, dans le cas d'un dispositif de reconnaissance d'état associé (Z₁₁, Z₁₂) du second type, est relié à l'entrée numérique de l'unité de commande (µP), le circuit de comparaison comparant un potentiel de tension généré sur la liaison de câblage (2a, 2b) à une tension de référence (U_{ref}).

9. Circuit en vue de la mise en oeuvre du procédé selon l'une des revendications 1 à 6 ainsi que selon la revendication 8, avec les caractéristiques suivantes :
a) en tant qu'éléments de circuit (Rₛ₁₁, Rₛ₁₂, Rₛ₂₁, Rₛ₂₂) est prévu un réseau de résistances, et
b) en tant que circuit de comparaison (K₁, K₂, Rₛ₁₁, Rₛ₁₂, Rₛ₂₁, Rₛ₂₂) est prévu un réseau de résistances et un comparateur,
c) pour a) et b) les mêmes résistances (Rₛ₁₁, Rₛ₁₂, Rₛ₂₁, Rₛ₂₂) sont utilisées.

10. Circuit en vue de la mise en oeuvre du procédé selon l'une des revendications 1 à 6 et selon la revendication 9, dans lequel, en tant que liaison de câblage (2a, 2b), est utilisée une broche d'un connecteur à fiches (2).
